# EUROPEAN PATENT APPLICATION

(11) **EP 4 667 110 A1**
(43) Date of publication of application: **24.12.2025**
(21) Application number: 24182482.0
(22) Date of filing: 17.06.2024
(51) Int. Cl.: B04B 1/08, B04B 7/14, B04B 9/04, B04B 9/12, F16C 19/06, F16C 19/54, F16C 27/06, F16C 33/30, F16C 33/32

(54) **A CENTRIFUGAL SEPARATOR**

(71) Applicant: Alfa Laval Corporate AB, 221 00 Lund (SE)
(72) Inventor: ASPLUND, Daniel, SE-141 30 HUDDINGE (SE); HANSSON, Martin, SE-128 69 SKÖNDAL (SE); HILDING, Klas, SE-138 39 ÄLTA (SE)
(74) Representative: Alfa Laval Attorneys

(57) **Abstract**

The present invention provides a centrifugal separator (1) for separating at least one liquid phase from a liquid feed mixture. The separator (1) comprises a rotatable portion (10), a stationary portion (2) and a drive motor (4) arranged for rotating the rotatable portion (10) relative said stationary portion (2) around an axis of rotation (X). The rotatable portion (10) comprises a centrifuge bowl (10a) and a rotatable shaft (7) onto which said centrifuge bowl (10) is mounted. The centrifuge bowl (10a) comprises a separation space (9a), in which surface enlarging inserts (17) are arranged, an inlet (11) for supply of the liquid feed mixture, at least one liquid outlet (12, 13) for discharge of a separated liquid phase. Further, at least one bearing (5, 6) is mounted to the rotatable portion (10) to facilitate its rotation, wherein said at least one bearing (5,6) comprises a plurality of ceramic bearing elements (51).

## Description

### Field of the Invention

The present invention relates to the field of high-speed centrifugal separators, and more specifically to the journalling of the rotating shaft of the centrifugal separator.

### Background of the Invention

High speed centrifugal separators are generally used for separation of liquids and/or for separation of solids from a liquid. During operation, liquid mixture to be separated is introduced into a rotating centrifuge bowl and heavy particles or denser liquid accumulates at the periphery of the rotating bowl whereas less dense liquid accumulates closer to the central axis of rotation. This allows for collection of the separated fractions, e.g. by means of different outlets arranged at different radii from the rotational axis. Separation members, such as a stack of frustoconical separation discs, are usually used within the rotating bowl in order to enhance the separation performance. An example of a high-speed centrifugal separator is described in patent application EP 3315205.

Centrifugal separators commonly comprise a centrifuge bowl mounted to a typically vertical spindle driven by a drive motor located beneath the centrifuge bowl. The centrifuge bowl typically has a relatively large weight in comparison to the drive motor and in addition, the centrifuge rotor is configured to handle large volumes of the product to be separated. The mass carried by the spindle during operation of the centrifugal separator is thus significant. Relatively small imbalances of the centrifuge bowl - e.g. due to the accumulation of separated solids within the bowl - may create problems during operation and set a high demand on the function of the bearing arrangement. Although the spindle may be journalled at further positions along the spindle, the bearing arrangement is usually the only journalling of the spindle. Typically, a combination of bearing types, such as deep groove ball bearings, angular contact bearings and spherical ball bearings, are used in a centrifugal separator. Thus, there is a need in the art for improved and simplified bearing solutions for a high-speed centrifugal separator.

### Summary of the Invention

A main object of the present invention is to provide a centrifugal separator with an improved bearing solution.

As a first aspect of the invention, there is provided a centrifugal separator for separating at least one liquid phase from a liquid feed mixture comprising
a rotatable portion, a stationary portion and a drive motor arranged for rotating the rotatable portion relative said stationary portion around an axis of rotation (X),
wherein the rotatable portion comprises a centrifuge bowl and a rotatable shaft onto which said centrifuge bowl is mounted,
wherein the centrifuge bowl comprises a separation space, in which surface enlarging inserts are arranged, an inlet for supply of the liquid feed mixture, at least one liquid outlet for discharge of a separated liquid phase,
and further wherein at least one bearing is mounted to the rotatable portion to facilitate its rotation, wherein said at least one bearing comprises a plurality of ceramic bearing elements.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X), and relative terms such as "inner" and "outer" refer to relative positions along the radial direction.

A bearing element is a rolling element of the bearing, usually arranged between an inner and outer raceway. The bearing elements may thus be rolling bearing elements.

The bearing system for a high-speed centrifugal separator is affected by the proportion of load in the radial and the axial direction. The first aspect of the invention in based on the insight that a bearing having ceramic bearing elements improves the function in a variety of ways:
- If the load in the axial direction is low compared to the radial it may create a situation where the contact force between the bearing rolling bearing elements, such as bearing balls, on the raceway on the unloaded side of the bearing is too low for rolling contact to occur. This can give us a phenomenon called "skidding" where the rolling bearing elements slips along the raceway for a short period of time before it enters the loaded area again and starts to roll along the raceway again. This gives an increase of temperature and a very tricky tribological situation. With the use of ceramic bearing elements, typically having a density that is lower than the density of traditional bearing elements in a high-speed centrifugal separator, the effect of skidding may be reduced.
- The ceramic bearing elements have typically a reduced surface roughness which makes them smoother. This may be an improvement in high-speed applications compared to metal-based bearing elements, in which extreme forces may force the metal to fuse together, resulting in splintered off particles travelling around the bearing raceway damaging the bearing.
- The hardness of the ceramic bearing elements may reduce the risk of micro cracks along the surface of the bearing element.
- In a centrifugal separator that is driven by an electrical motor and in which the motor rotor is directly connected to the rotatable shaft, electrical currents may be generated through the bearing, increasing the risk of sparks arising in the bearing, such as between the bearing's roller elements and the raceways. With the use of ceramic bearing elements, such risk is severely reduced.
- The inventors have also realised that a bearing having ceramic bearing elements also are useful in handling dirt etc that may contaminate the raceways of the bearing. Further, also a damaged raceway may be "repaired" by the ceramic bearing elements.

Although bearings having ceramic bearing elements are known in the prior art, there have been doubts related to the lifetime and robustness of such a bearing in a high-speed centrifugal separator. Further, a bearing with ceramic bearing elements may require more delicate handling during mounting and replacement and therefore considered to be unsuited for separator applications. The inventors have thus realised that a bearing having ceramic bearing elements indeed may be useful in a centrifugal separator.

The at least one bearing is mounted to the rotatable portion of the centrifugal separator. The rotatable portion may in addition to the centrifuge bowl comprise a rotatable shaft, onto which the centrifuge bowl is mounted. The at least one bearing may be mounted to the rotatable shaft.

In embodiments of the first aspect, the at least one bearing comprises
an inner ring connected to the rotatable portion of the centrifugal separator and forming a rounded inner raceway,
an outer ring connected to the stationary portion of the centrifugal separator and forming a rounded outer raceway,
a plurality of ceramic bearing elements engaged between the inner raceway and the outer raceway.

The inner and outer ring, and also the inner and outer raceway, may be of a metallic material, such as steel. Consequently, the at least one bearing may be a hybrid bearing.

The at least one bearing may be arranged in a bearing housing, and such bearing housing may be connected to the stationary portion of the centrifugal separator. Thus, the outer ring may be rigidly connected to the bearing housing.

As an example, the outer ring may not be rigidly connected to the stationary portion. Accordingly, if the bearing is arranged in a bearing housing, the bearing housing may not be rigidly connected to the stationary portion of the centrifugal separator.

As an example, the outer ring may be connected to the stationary portion so as to permit the rotatable shaft to tilt in relation to the axis of rotation (X) during operation of the centrifugal separator.

This may be achieved by the outer ring or bearing housing being mounted to the stationary portion via a tilting member that has a low tilting torque. The tilting member may be in the form of a stack of discs that are connected to each other and surrounds the outer ring. In addition to a tilting member, there may further be an elastic member between the outer ring and the stationary portion. Such elastic member and the tilting member may be arranged one after the other in the radial direction.

In embodiments of the first aspect, the plurality ceramic bearing elements are balls or other roller bearing elements.

Thus, the at least one bearing may be a ball bearing. Other roller bearing elements may for example be in the form of cylindrical elements.

As an example, the ceramic bearing elements may comprise silicon nitride (Si₃N₄).

In embodiments of the first aspect, the least one bearing is an angular contact bearing.

In an angular contact ball bearings, the inner and outer ring raceways are displaced relative to each other in the direction of the bearing axis, thereby allowing the bearing to accommodate both radial and axial loads. The weight of the load may be transferred between the rings, through the balls, along a specific contact angle.

It is an advantage to use an angular contact bearing in a high-speed centrifugal separator due to the rather long and thin rotatable shaft onto which the heavy centrifuge bowl is mounted. In other words, the bearing arrangement of a centrifugal separator experience both large radial and axial loads. Further, the separator may have to handle very large radial forces in extreme cases when large imbalances arise during operation, and then the angular contact bearing having ceramic bearing elements is an advantage since it may function with only limited amount of lubrication in a tough environment during short periods of time. Thus, an angular contact bearing having ceramic bearing elements provides for a more robust construction.

However, the at least one bearing may be any type of bearing, such as any type of radial ball bearing, radial roller bearing, needle roller bearing, tapered roller bearing or spherical roller bearing.

In embodiments of the first aspect, at least two, such as at least three bearings of the centrifugal separator are angular contact bearings having ceramic bearing elements. As an example, all bearings of the centrifugal separator may be angular contact bearings having ceramic bearing elements.

The inventors have found that the use of angular contact bearings with ceramic bearing elements allows for not having to introduce a spherical bearing for supporting the rotatable portion. A spherical bearing is a bearing that permits rotation about a central point in two orthogonal directions. The spherical bearing may be a spherical roller bearing. In prior art centrifugal separator, a spherical bearing is usually used for allowing the rotatable shaft to deal with misalignments in the separator or rotatable shaft during operation.

Consequently, in embodiments of the first aspect, the separator is free from any spherical bearing for supporting the rotatable portion, such as the rotatable shaft.

increased with a factor of three.

In embodiments of the first aspect, the at least one bearing is a super precision bearing.

A super precision bearing is the common name for a roller bearing produced with improved accuracy and stiffness and having properties that make it possible to run at very high speeds. In the context of the present disclosure, a super precision bearing has a standard precision level of ABEC 7 or higher (ABEC scale =Annular Bearing Engineers' Committee industry accepted standard for the tolerances of a ball bearing).

In embodiments of the first aspect, the at least one bearing is an angular contact bearing, such as an angular contact bearing that is a super precision bearing.

In embodiments of the first aspect, the at least one bearing has an inner diameter of at least 70 mm, such as at least 75 mm, such as at least 80 mm, such as at least 85 mm.

If the inner diameter is over 70 mm, it is an extra advantage in using ceramic bearing elements, since the centrifugal force and therefore also the risk of "skidding" (as explained above) is high. The ceramic bearing elements have a lower density than traditional steel bearing elements, which is why the risk of skidding is reduced.

Consequently, the rotatable shaft, such as a hollow spindle, may have an outer diameter that fits to the inner diameter of the bearing.

However, in other embodiments, the inner diameter is smaller, such as at least 40, or at least 50 mm.

In embodiments of the first aspect, the at least one bearing comprises at least 10 ceramic bearing elements, such as at least 15 ceramic bearing elements. In addition, the ceramic bearing elements may be relatively small. As an example, the ceramic bearing elements may be balls having a diameter of less than 40 mm, such as less than 30 mm.

In embodiments of the first aspect, the centrifugal separator comprises at least two bearings, such as at least three bearings, wherein each bearing comprises ceramic bearing elements.

In addition, the at least two, or at least three, bearings may be of the same type, such as at least two, or at least three, angular contact bearings comprising ceramic bearing elements. Having bearings of the same type may facilitate service and manufacturing of the centrifugal separator.

In embodiments of the first aspect, the rotatable shaft is a hollow shaft. Such hollow shaft may be arranged for supply of the liquid feed mixture to the centrifuge bowl or for discharge of a separated liquid phase from the centrifuge bowl.

In such a setup, in which the rotatable shaft is used for supply or discharge of a process liquid, it may be an advantage to use bearings mounted to the rotatable shaft and comprising ceramic bearing elements. This is since a bearing that is mounted at such a hollow shaft needs to withstand the temperature changes when processing different materials in a centrifugal separator, such as cold beer of few degrees centigrade up to hot oil having a temperature of almost a hundred degrees centigrade.

Alternatively, the hollow shaft may be arranged for supply of any other process liquid to the centrifugal separator, such as pressurized liquid used for intermittently open solid outlets or for supply of cooling liquid.

In embodiments of the first aspect, the drive motor is arranged to rotate the rotatable portion at a rotational speed of at least 4000 rpm. At high rotational speed, the problem with "skidding" may be increased, and the use of ceramic bearing elements - with a density smaller than traditional bearing elements - may therefore be an advantage.

In embodiments of the first aspect, the drive motor is an electrical motor comprising a motor stator and a motor rotor, and wherein the motor rotor is directly connected to the rotatable shaft .

Thus, the drive motor and the rotatable shaft may be coaxial. In such a directly driven centrifugal separator, the ceramic bearing elements may serve as electrical insulation, thereby reducing the risk of currents generated by the electrical motor going through the bearing. This in turn reduces the risk of sparks being generated at the bearing.

As an example, the centrifugal separator may further comprise a variable frequency drive (VFD) for controlling the speed and torque of the drive motor.

The VFD varies frequency and amplitude of the voltage being supplied by the VFD to the drive motor of the separator to control the speed and torque of the motor accordingly. The voltage may be switched rapidly between distinct voltage levels, which is why the risk of sparking may be higher in a VFD controlled motor when such high-frequency voltages find a bath through the bearing. This is why ceramic bearing elements may be extra useful together with a VFD controlled motor in a centrifugal separator.

In embodiments of the first aspect, the centrifugal separator further comprises a lubrication system for lubricating the at least one bearing with an oil.

In embodiments of the first aspect, the at least one bearing is a grease lubricated bearing.

Thus, the centrifugal separator may have no dedicated lubrication source other than the grease for lubricating the ceramic bearing elements.

The centrifugal separator is for separation of a liquid feed mixture. The liquid feed mixture may be an aqueous liquid or an oily liquid. As an example, the centrifugal separator may be for separating solids and one or two liquids from the liquid feed mixture.

The centrifugal separator comprises a stationary portion and a rotatable portion.

The stationary portion may in turn comprise a frame in which the drive motor is arranged as well as a hood covering the centrifuge bowl. The centrifuge bowl of the separator may be arranged to be rotated around vertical axis of rotation, i.e. the axis of rotation may extend vertically. The centrifuge bowl is mounted on a rotatable shaft and thus mounted to rotate together with the shaft.

The drive motor is arranged to rotate the centrifuge bowl around the axis of rotation. The drive motor may comprise an electrical motor - such as an electrical motor having its motor rotor arranged around the rotatable shaft. Alternatively, the drive motor may be provided beside the rotatable shaft and rotate the rotatable portion of the centrifugal separator by a suitable transmission, such as a belt or a gear transmission.

The centrifuge bowl encloses by it walls a separation space. The separation space, in which the separation of the fluid mixture takes place, comprises surface enlarging inserts, i.e. separation members that may be in the form of a stack of separation discs. The separation discs may e.g. be of metal. Further, the separation discs may be frustoconical separation discs, i.e. having separation surfaces forming frustoconical portions of the separation discs. The separation discs may be arranged coaxially around the axis of rotation at a distance from each other such that to form passages between each two adjacent separation discs.

The centrifuge bowl also comprises an inlet for supply liquid mixture to be separated (the liquid feed mixture). This inlet may be arranged for receiving the liquid feed mixture and be arranged centrally in the centrifuge bowl, thus at the rotational axis. The centrifuge bowl may be arranged to be fed from the bottom, such as through a rotating shaft onto which the centrifuge bowl is mounted. However, the centrifuge bowl may also be arranged to be fed from the top, such as through a stationary inlet pipe extending into the bowl to the inlet.

Further, the at least one liquid outlet for a separated liquid phase may be in the form of one or two liquid outlets. Such liquid outlets for separated liquid phase or phases may be arranged at the top or the bottom of the centrifugal separator.

The centrifugal separator may also be arranged for discharging a solid phase, either continuously or intermittently, as known in the art.

As a second aspect of the invention, there is provided a method of separating at least one liquid phase from a liquid feed mixture comprising the steps of:
- Providing a centrifugal separator according to the first aspect,
- Supplying a liquid feed mixture to the inlet of the centrifuge bowl,
- Discharging at least one liquid phase from the centrifuge bowl.

The liquid feed mixture may for example have a temperature that is below 10 °C.

The liquid feed mixture may have a temperature that is above 90 °C.

### Brief description of the Drawings

The above, as well as additional objects, features and advantages of the present inventive concept, will be better understood through the following illustrative and nonlimiting detailed description, with reference to the appended drawings. In the drawings like reference numerals will be used for like elements unless stated otherwise.
Figure 1 shows a schematic drawing of a centrifugal separator.
Figure 2 shows a schematic drawing of a bearing having ceramic bearing elements.
Figure 3 shows a schematic drawing of a cross-section of an angular contact bearing.
Figure 4 shows a schematic drawing of a bearing housing being arranged so as to permit the rotatable shaft to tilt in relation to the axis of rotation (X).

### Detailed Description

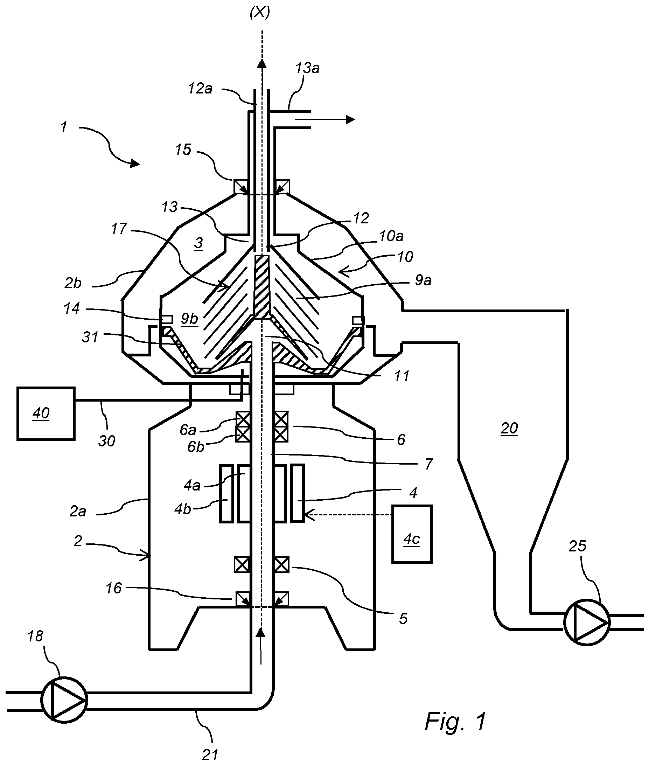

Fig. 1 shows a cross-section of an embodiment of a centrifugal separator 1 which in this embodiment is arranged to separate a solid phase, a liquid heavy phase and a liquid light phase from a liquid feed mixture.

The centrifugal separator 1 comprises a stationary portion 2 and a rotatable portion 10. The stationary portion 2 of the centrifugal separator 1 comprises a lower frame 2a and a stationary hood 2b that surrounds at least the upper portion of the centrifuge bowl 10a. The hood 2b thus defines at least part of a surrounding space 3 in which the centrifuge bowl 10a is arranged.

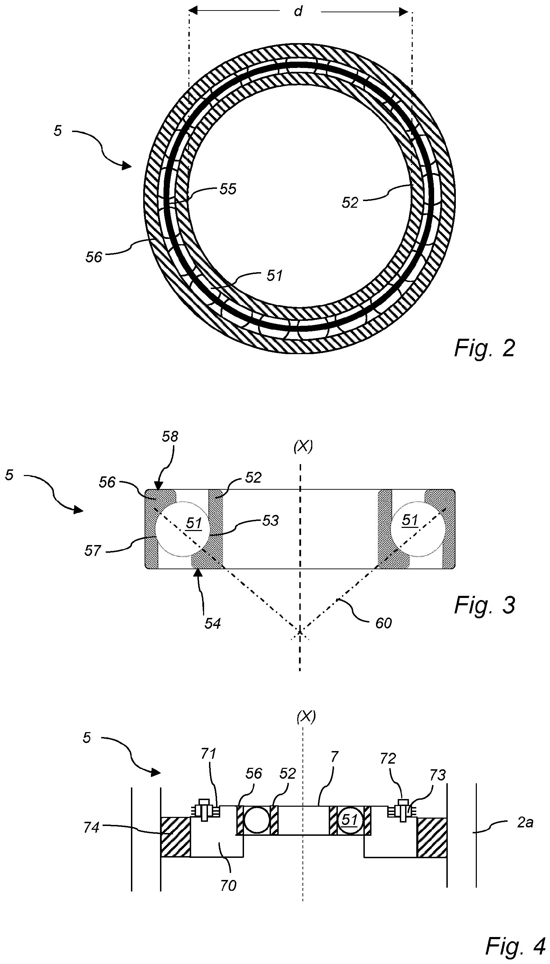

The rotatable portion 10 comprises a centrifuge bowl 10a and rotatable shaft 7 in the form of a spindle. The centrifuge bowl 10a is mounted on the upper end of the spindle 7 and thus arranged to rotate around an axis of rotation (X) together with spindle 7. The rotatable portion is supported by a bottom bearing 5 and an upper bearing system 6. In this example, the upper bearing system 6 actually comprises two bearings 6a, 6b connected in series, one axially above the other. At least one of the bearings - such as all three bearings 5, 6a, 6b- comprises roller ceramic bearing elements. A bearing 5, 6 with ceramic bearing elements will be explained further in relation to Figs. 2-4 below. In this example, the bearings are arranged axially on both sides of the drive motor 4. However, in other embodiments, all bearings are arranged axially on one side of the drive motor 4, such as all arranged axially above the drive motor 4. The centrifugal separator may further comprise a lubrication system (not shown) for lubricating the bearings with an oil. The oil may be delivered in small pulses to the bearings to decrease the consumption of lubrication oil. As an alternative, the bearings may be grease-lubricated bearings, and thus have no additional lubricating source for lubricating the bearings.

The centrifuge bowl 10a forms within itself a separation space 9a in which centrifugal separation of the liquid feed mixture takes place during operation. The separation space 9a within the centrifuge bowl 10a is provided with a stack of frustoconical separation discs 17 in order to achieve effective separation of the liquid feed mixture, such as separation discs disclosed in EP3315203.

The spindle 7 is in this example a hollow spindle that is used for introducing the liquid feed mixture to the inlet 11 of the centrifuge bowl 10. The inlet 11 and the hollow spindle is sealed by an inlet seal 16 to a stationary inlet pipe 21. The centrifuge bowl 10 further comprises a liquid outlet 12 for discharging a separated liquid light phase and a liquid outlet 13 for discharging a liquid heavy phase. The liquid light phase outlet 12 is arranged at a smaller radius than the liquid heavy phase outlet 13. There is further a stationary outlet pipe 12a connected to the liquid light phase outlet 12 for receiving the separated liquid light phase, and a stationary outlet pipe 13a connected to the liquid heavy phase outlet 13 for receiving the separated liquid heavy phase. The liquid outlets 12, 13 are sealed to stationary outlet pipes 12a, 13a, using an outlet seal 15. The inlet 16 and/or outlet 15 seal could be in the form of a mechanical seal.

The centrifuge bowl 10a further comprises a solid phase outlet 14 for discharging a separated solid phase that has accumulated in sludge space 9b - located radially outside separation space 9a - to the surrounding space 3. In this example, the solid phase outlet 14 takes the form of a plurality of intermittently openable sludge outlets arranged at the outer periphery of the centrifuge bowl 10a. The solid phase outlets 14 form part of an intermittent discharge system and the opening and closing of the sludge outlets 14 is controlled by the axial movements of operating slide 31 arranged within the bowl 10a. The operating slide 31 is thus movable between a closed position in which the sludge outlets 14 are closed, and an open position, in which sludge outlets 14 are open. Actuation of the operating slide is performed by supply of operating water - such as opening water and closing water - via one or several lines line 30 to the centrifuge bowl 10a. In this example, the operating water is supplied via an operating water module (OWM) 40. During operation of the centrifugal separator 1 closing water supplied by the OWM 40 acts on the operating slide 31 to close the outlets 14. The draining of the closing water - and thereby opening of the sludge outlets 14 - is initiated by introducing opening water to the bowl 10a to axially displace sliding bowl bottom axially downwards for fractions of a second.

Discharged solid phase is collected under the hood 2 and further directed to vessel 20. The vessel 20 is in the form of a cyclone and thus arranged for collecting the separated solid phase discharged from the centrifuge bowl 10. The vessel 20 is further connected to a discharge device 25 in the form of a sludge pump for discharge of sludge and liquid present in the vessel 20.

The centrifugal separator 1 further comprises a drive motor 4 configured to rotate the spindle 7 and the centrifuge bowl 10 around the axis of rotation (X). The drive motor 4 is an electrical motor arranged to rotate the rotatable portion 10 at a rotational speed of at least 4000 rpm. The electric motor comprises a motor stator 4b that is connected to the stationary portion and a motor rotor 4a that is directly connected to the spindle 7. In other words, the motor rotor 4a and the rotatable portion 10 of the separator 1 have the same rotational axis (X). In addition, the centrifugal separator further comprises a variable frequency drive (VFD) 4c for controlling the speed and torque of the drive motor 4.

During operation of the separator in Fig. 1, the centrifuge bowl 10a is caused to rotate by torque transmitted from the drive motor 4 to the spindle 7. Via the stationary inlet pipe 21, liquid mixture to be separated is supplied to the hollow spindle 7 and inlet 11 using the inlet feed pump 18. From there, the liquid mixture to be separated is brought into the separation space 9a and further between the separation discs of the disc stack that is fitted in the separation space 9a. A separated liquid light phase moves radially inwards between the separation discs and is discharged via the liquid light phase outlet 12 to the stationary outlet pipe 12a. Heavier components in the liquid mixture, e.g. solid particles and the liquid heavy phase, move radially outwards between the separation discs, so that the liquid heavy phase is discharged via the liquid heavy phase outlet 13 to the stationary outlet pipe 13a. The separated solid phase accumulates in the sludge space 9b and is emptied intermittently from the solid phase outlets 14 by actuating the operating slide 41 to move axially downwards for fractions of a second. Actuation of the operating slide is performed by the supply of pressurized water from the OWM 40 via line 30, as known in the art.

The centrifugal separator 1 of the present invention may be any type of high-speed centrifugal separator for separating the liquid feed mixture, such as a separator for separating the liquid feed mixture into a single liquid phase and a solid phase, a separator in which the solid phase is retained in the centrifuge bowl or a separator in which the separated solid phase is continuously ejected from the centrifuge bowl 10a.

Figure 2 shows an embodiment of a bearing that may be used as one of the upper bearings 6a, 6b 6 or the lower bearing 5. The bearing comprises a metallic inner ring 52 that is firmly connected to the rotatable hollow shaft 7 and a metallic outer ring 56 that is connected to the stationary portion 2 of the centrifugal separator 1. A plurality of roller bearing elements 51 in the form of balls are disposed in the space between the inner 52 and outer 56 ring. The outer surface of the inner ring 52 forms a rounded inner raceway 53, and the inner surface of the outer ring 56 forms a rounded outer raceway 57, and the plurality of roller bearing elements 51 are engaged and in rolling contact with the inner 53 and outer 57 raceways, i.e. the roller bearing elements 51 are adapted to roll on the inner 53 and/or outer 57 raceways during operation. In this example, roller bearing elements 51 are guided by a bearing retainer, or cage, 55, e.g. made of a plastic material, such as polyamide, which is arranged radially between the inner 52 and outer 53 rings.

A plurality, or all, of the roller bearing elements 51 are ceramic bearing elements 51, preferably comprising or consisting of silicon nitride (Si₃N₄). In this example, the bearing comprises at least 15 silicon nitride balls, each having a diameter of less than 40 mm. Further, the inner diameter d of the bearing 5 may be at least 70 mm.

The bearing 5 is in this example an angular contact bearing. Such bearing is further discussed in relation to Fig. 3, which shows a cross-section of an angular contact bearing 5 that may be used in the centrifugal separator 1 of the present invention. The angular contact ball bearing 5 is arranged such that the inner 53 and outer 57 raceways are displaced relative to each other in the direction of the rotational axis (X). This is due to the presence of an axially upper shoulder 58 on the outer ring 56 and an axially lower shoulder 54 on the inner ring 52, which both forms at least part of the outer 57 and inner 53 raceways. Or, in other words, a lower shoulder is missing on one of the rings and an upper shoulder is missing on the other ring, as compared to a regular deep groove ball bearing. With such an oblique arrangement in the direction of the rotational axis, the forces are transmitted from one raceway to the other at a defined contact angle, as indicated by line 60. The angular contact bearing 5 is thereby designed to accommodate combined loads, i.e. simultaneously acting radial and axial loads. This together with the ceramic bearing elements have been found to give a bearing especially suitable for the forces experienced by a centrifugal separator 1.

As an example, both the lower bearing 5 as well as the bearings 6a, 6b of the upper bearing system 6 may be angular contact bearings. Shown in these Figures are single row angular contact bearings, but angular contact bearings having several rows of bearing elements - such as double row bearing elements - may be used as well. If single row angular contact bearings are used, the bearings 6a and 6b may be mounted in a set, i.e. a set in which one bearing is arranged axially directly on top of the other. In such cases, the set of single row angular contact bearings 6a, 6b may be mounted in tandem-, O- or X-arrangement, as known in the art. The arrangement of the bearing set may depend on the overall design of the centrifugal separator 1, e.g. if the load carrying capacity of one bearing 6a, 6b is not sufficient or if combined or axial loads occur in both directions.

The outer ring 56 of the bearing 5 do not have to be rigidly connected to the stationary portion 2 of the centrifugal separator 1. As an example, the outer ring 56 may be connected to the stationary portion 2 so as to permit the rotatable shaft 7 to tilt in relation to the axis of rotation (X) during operation of the centrifugal separator 1. Such an example is schematically seen in Fig. 4, in which the bearing 5 is retained in bearing housing 70. Thus, outer ring 56 is rigidly connected to the bearing housing whereas inner ring 52 may be rigidly connected to the rotatable shaft 7, which may be a hollow spindle for introducing the liquid feed mixture or for discharging a separated liquid phase. Further, there is a tilting member 73 is arranged around an upper portion of the bearing housing 20. The tilting member 71 may be in the form of a pack of annular discs forming a through hole for receiving the bearing housing 70. Further, each of the annular discs may comprise a plurality of apertures extending through each of the discs and a sleeve element 73 provided in each of the apertures for holding the annular discs together as a stack and for receiving a fastening elements 72 for attaching the tilting member 71 to the bearing housing 70 and the frame 2a, respectively.

Further, there are fastening elements 72, such as screws, extending through some, but not all, of a number of sleeve elements 73. These fastening elements 64 are used to attach the tilting member 71 to the bearing housing 20. The sleeve elements 73 in which there is no fastening element 72 attaching the tilting member 71 to the bearing housing 20 is instead used for attaching the tilting member to an elastic coupling element 74 arranged radially between the bearing housing 70 and the stationary portion 2, such as the frame 2a. The elastic coupling element 74 is adapted to permit the bearing housing 70 and thus the shaft 7 to move radially during the rotation of the spindle 3. The elastic element 74 may be made of a rubber material, such as e.g. nitrile rubber.

The invention is not limited to the embodiments disclosed but may be varied and modified within the scope of the claims set out below. The invention is not limited to the type of separator as shown in the Figures. The term "centrifugal separator" also comprises centrifugal separators with a substantially horizontally oriented axis of rotation.

## Claims

1. A centrifugal separator (1) for separating at least one liquid phase from a liquid feed mixture comprising
a rotatable portion (10), a stationary portion (2) and a drive motor (4) arranged for rotating the rotatable portion (10) relative said stationary portion (2) around an axis of rotation (X),
wherein the rotatable portion (10) comprises a centrifuge bowl (10a) and a rotatable shaft (7) onto which said centrifuge bowl (10) is mounted,
wherein the centrifuge bowl (10a) comprises a separation space (9a), in which surface enlarging inserts (17) are arranged, an inlet (11) for supply of the liquid feed mixture, at least one liquid outlet (12, 13) for discharge of a separated liquid phase,
and further wherein at least one bearing (5, 6) is mounted to the rotatable portion (10) to facilitate its rotation, wherein said at least one bearing (5,6) comprises a plurality of ceramic bearing elements (51).

2. A centrifugal separator (1) according to claim 1, wherein said at least one bearing (5,6) comprises
an inner ring (52) connected to the rotatable portion (10) of the centrifugal separator (1) and forming a rounded inner raceway (53),
an outer ring (56) connected to the stationary portion (2) of the centrifugal separator (1) and forming a rounded outer raceway (57),
a plurality of ceramic bearing elements (51) engaged between the inner raceway (53) and the outer raceway (57).

3. A centrifugal separator (1) according to claim 2, wherein said outer ring (56) is not rigidly connected to the stationary portion (2).

4. A centrifugal separator (1) according to claim 3, wherein said outer ring (56) is connected to the stationary portion (2) so as to permit the rotatable shaft (7) to tilt in relation to the axis of rotation (X) during operation of the centrifugal separator (1).

5. A centrifugal separator (1) according to any previous claim, wherein the plurality of ceramic bearing elements (51) are balls or other roller bearing elements.

6. A centrifugal separator (1) according to any previous claim, wherein the ceramic bearing elements (51) comprises silicon nitride (Si₃N₄).

7. A centrifugal separator (1) according to any previous claim, wherein said at least one bearing (5,6) is an angular contact bearing.

8. A centrifugal separator (1) according to any previous claim, wherein the at least one bearing (5,6) has an inner diameter of at least 70 mm.

9. A centrifugal separator (1) according to any previous claim, wherein the centrifugal separator (1) comprises at least two bearings (5,6), such as at least three bearings (5,6), wherein each bearing (5,6) comprises ceramic bearing elements (51).

10. A centrifugal separator (1) according to any previous claim, wherein the rotatable shaft (7) is a hollow shaft arranged for supply of said liquid feed mixture to the centrifuge bowl (10a) or for discharge of a separated liquid phase from the centrifuge bowl (10a).

11. A centrifugal separator (1) according to any previous claim, wherein the drive motor (4) is arranged to rotate the rotatable portion (10) at a rotational speed of at least 4000 rpm.

12. A centrifugal separator (1) according to any previous claim, wherein the drive motor (4) is an electrical motor comprising a motor stator (4b) and a motor rotor (4a), and wherein the motor rotor (4a) is directly connected to the rotatable shaft (7).

13. A centrifugal separator (1) according to claim 12, wherein the centrifugal separator (1) further comprises a variable frequency drive (VFD) (4c) for controlling the speed and torque of the drive motor (4).

14. A centrifugal separator (1) according to any previous claim, wherein the centrifugal separator (1) further comprises a lubrication system (80) for lubricating the at least one bearing (5,6) with an oil.

15. A centrifugal separator (1) according to any one of claims 1-14, wherein the at least one bearing (5,6) is a grease lubricated bearing.
